# EUROPEAN PATENT APPLICATION

(11) **EP 4 450 273 A1**
(43) Date of publication of application: **23.10.2024**
(21) Application number: 24163814.7
(22) Date of filing: 15.03.2024
(51) Int. Cl.: B32B 3/04, B32B 5/02, B32B 5/24, B32B 5/18, E01C 13/00

(54) **ANTI-SHOCK SYSTEM, PANEL AND METHOD OF MANUFACTURE**

(30) Priority: 21.04.2023 IT 202300007878
(71) Applicant: D & S S.r.l., 21020 Galliate Lombardo (VA) (IT)
(72) Inventor: MICCICHE', Luca Salvatore, 21020 GALLIATE LOMBARDO (VA) (IT)
(74) Representative: Faggioni, Carlo Maria

(57) **Abstract**

An anti-shock system and method of manufacture thereof, for containment rooms with perimeter walls is disclosed, comprising at least an energy-absorbing panel with at least one layer of polymeric foam material, attached by means of fastening means to a supporting surface of said walls,
wherein said layer of polymeric foam material constitutes a core layer and is covered, at least on its outer sides not adhering to said supporting surface, with a covering layer consisting of glass-fibre fabric.

## Description

### FIELD OF THE INVENTION

The present invention relates to an anti-shock system for surfaces and a related anti-shock panel. In particular, the present invention relates to anti-shock systems installed in sports venues which are intended to protect people from accidental collisions against surfaces.

### STATE OF PRIOR ART

In places such as gyms, especially training gyms, it has long been the practice to install padded panels at least on the vertical walls, which are capable of reducing trauma to gym users in the event of accidental collisions against such surfaces. The Italian standard has long regulated the minimum requirements to which the panels used for this purpose must respond.

Particular care is taken if the users of training and sports gyms are children, because, as they move in a less controlled manner than adults and are naturally less resistant than adults, they run a greater risk of suffering an injury from an accidental impact against a gymnasium surface. On the other hand, even athletes (amateurs and competitors), during competitions held indoors, perform risky manoeuvres under competition pressure at the expense of their own safety, who may appreciate a higher level of passive protection against impact.

Virtually all of the cladding panels used for this purpose are based on soft synthetic polymer, the preferred being closed-cell expanded polyethylene. Although closed-cell polyethylene foam has excellent impact absorption capabilities, it is too brittle and leaving it exposed would reduce its duration.

By protecting expanded polyethylene with a thin coating, the inherent problem of friability is overcome. The currently preferred coating material is PVC (polyvinyl chloride). In fact, a PVC-based coating manages to seal the underlying polymer, providing an attractive yet durable and reliable finish. Depending on the situation, it is possible to define protective panels with a layer thickness of polyethylene ranging from approximately 2 to 4 cm coupled with a PVC surface coating layer of a few millimetres.

However, the PVC coating does not provide adequate fire retardant qualities for the protective panel. Subsequent to the year 2014, the change in fire protection regulations made the use of polymeric protection panels of known technology very problematic, because they are not suitable for passing fire tests.

To date, no operator in the market has yet managed to fully meet these new requirements.

There is therefore a strong need to provide a protective panel system that maintains the impact performance of known technology, while still meeting the fire resistance requirements of current regulations.

In the field of laminated materials, there are of course numerous versions of cladding panels. Examples include FR 2600348 and WO 2018197543, which, however, concern panels with a composite structure comprising a foam base and a layer of glass fibre. In these cases, as the panels are used as a covering for a sports floor, it is taught to insert a layer of glass fibre in an intermediate position in softer foam layers to strengthen the mechanical resistance. The issue of fire resistance is not addressed.

### PROBLEM AND SOLUTION

The problem behind the invention is therefore to provide a shock (anti-shock) protection system that overcomes the mentioned drawbacks, i.e. to provide a fire resistant protection system.

In particular, the scope of the invention is to provide an anti-shock system that simultaneously meets a number of requirements, such as:
- ability of the panel core to absorb and dissipate kinetic energy from impact,
- a finish coating that protects the core of the panel and has good adhesion to the soft material of which it is made;
- high-flexibility coating;
- durability over time;
- impact resistance;
- ability of the cladding to resist fire and to form a barrier to the underlying panel core, so that the finished product (panel) falls within the regulatory (euroclass) classifications, for use in public facilities on the entire surface of protection.

This is achieved through the features mentioned in claim 1. Dependent claims disclose preferential features of the invention.

In particular, according to a first aspect of the invention, there is provided an anti-shock system for containment rooms provided with perimeter walls, comprising at least one energy-absorbing panel, provided with at least one layer of polymeric foam material, secured by means of fastening means to a supporting surface of said walls, wherein
said layer of foamed polymer material constitutes a core layer and is covered, at least on its outer sides not adhering to said support surface, with a covering layer consisting of glass-fibre fabric.

Preferably, the core layer is made of closed-cell polyethylene foam at least 10 mm thick.

According to a preferred aspect, the foam core layer has a density of between 20 and 60 kg/m³ and thicknesses of 10 to 40 mm.

The coating made of glass-fibre fabric has a grammage between 190 and 520 g/m³ and a thickness of less than 10 mm.

In another respect, the glass fibre fabric is primed.

According to one variant, the anti-shock system comprises a plurality of panels placed side by side, and a free perimeter edge is also coupled to the covering layer formed by glass fibre fabric.

According to another aspect, a shock-absorbing panel is provided for an anti-shock system, comprising at least a core layer made of polymeric foam material that is coated externally, at least on its exposed sides, with a covering layer made of glass-fibre fabric with a grammage between 190 and 520 g/m³ and a thickness of less than 10 mm.

In a further aspect, it is also provided a method of manufacturing a panel as shown above, in which a core layer made of polymeric foam material is laminated by hot-rolling with a covering layer made of glass-fibre fabric.

### DETAILED DESCRIPTION OF A PREFERRED EMBODIMENT

An impact protection system (anti-shock system) of the present invention is used in environments where sports activities are practised, whether of the educational, amateur or professional type, or where the mere presence of children is considered (think of kindergarten classrooms, for example). Such environments, in the context of the present application, are defined as 'containment' room to mean that they refer to areas that are delimited by surfaces (horizontal, vertical, flat, curved...) against which impacts can potentially occur.

Typically, the system consists of energy-absorbing panels, fixed to the walls of a gymnasium or other room in which people or animals might accidentally hit the boundary walls (perimeter walls) with energy. In the context of this description, the boundary walls may be either load-bearing or non-load-bearing walls (e.g. lightweight inner walls) or in any orientation and arrangement (vertical, horizontal, flat or curved).

The shock-absorbing system which is going to be disclosed below can take any form to cover any hazardous surface. A hazardous surface is to be understood as any surface on which a user may inadvertently collide.

Numerous tests were conducted by the Applicant before it was possible to identify a suitable panel composition that could achieve all the desired results and then be easily installed on a building wall.

Finally, the Applicant determined that for this particular application, the ideal combination is to couple the exposed surface of a core layer of foam material with a cover layer of glass fibre fabric.

In detail, the core layer of foam material has a density of 20 to 60 kg/m³ and thicknesses of 10 to 40 mm, preferably made of a closed-cell polyethylene-based material. A covering layer on the exposed side(s) (e.g. all sides of a panel, except for the side to be adhered against the supporting wall) is a woven glass fibre fabric with a particular grammage, in particular a grammage of between 190 and 515 g/m³ and a thickness of definitely less than 10 mm. Non-woven glass-fibre fabrics of different specific weights have proven to be much less effective. In fact, the parameters identified are an optimisation in the coupling with the shock-absorbing core layer and in the specific application, which guarantee a good fire barrier, but at the same time sufficient flexibility of the panel and satisfactory aesthetic performance even after the hot coupling of the two layers.

From a constructional point of view, the glass fibre fabric coating is applied to the polymer core layer by means of a hot-rolling application process. Preferably, the heat to intimately adhere the soft core layer material to the glass fibre fabric coating is provided by a hot air source.

The step of hot bonding the two layers proved to be critical due to the different thermal shrinkage coefficients between the glass fibre fabric and the polymeric material of the core layer. The particular grammage considered for the glass fibre fabric coating allows for a good hot lamination with the core layer, without causing unpleasant surface wrinkling.

It should be pointed out that due to the propensity of glass fibre-based fabrics to fray, in the process of manufacturing the anti-shock system according to the present invention, it is preferable to use glass fibre-based fabric yarns that have been primed prior to weaving. The priming is done by applying a priming agent based on starch and polyvinyl alcohol.

Alternatively, it is possible to apply a different surface finish to the glass-fibre fabric without priming; an example of a surface finish is a surface treatment of the glass fabric with silane/silanes, which promotes and improves the adhesion between the fabric and the polymer that is applied during further processing. As a further alternative, a silanised or primed fabric can be coated with a polymer-based coating.

The individual panels consisting of the polymer core layer are covered with glass fibre fabric on both the exposed side (i.e. the most extended side facing the direction of potential impact) and the edges (i.e. the sides defining the thickness of the panel), and are then installed to a wall by placing them next to each other along their respective edges and then fixing them to the wall. The fastening, either of a single panel to the supporting surface, or of a single panel to another single panel that is juxtaposed, can be done with metal fasteners or with appropriate adhesives or glues (e.g. a solvent-based polychloroprene adhesive or similar adhesives suitable for fire resistance).

The protection of the entire core edges by the above procedure offers, as a primary benefit, protection of the core from fire and, as a secondary benefit, protects the core from children, who could detach or tear the core from the system, damaging it and impairing its anti-shock capabilities.

From a technical point of view, the anti-shock system manufactured according to the above teachings is able to achieve excellent results in fire resistance. If appropriately configured, the system of the invention is also able to achieve a fire resistance rating B-S2-do grade, falling within the standards of the European regulations.

The configuration identified also exhibits excellent characteristics for absorbing energy in impacts, while also maintaining sufficient surface flexibility to prevent injury to those who strike against it. The hot coupling between the fibreglass fabric covering and the foam core avoids the use of adhesives, which would compromise fire resistance, and, with the envisaged coating weights, produces a durable and aesthetically pleasant final surface, with the possibility of applying different colours to the final system.

It is understood, however, that the invention is not to be considered limited to the particular features illustrated above, which is only an exemplary embodiment thereof, but that several variants are possible, all within the reach of a person skilled in the art, without thereby going beyond the scope of protection of the invention itself, as defined by the following claims.

For example, although reference has always been made to a panel of limited dimensions (e.g. 220x80 cm) - to be placed next to other panels in order to cover an entire wall - the same term is also used to designate a single large panel, which can be supplied in the form of a roll and then stretched and cut to size on the supporting wall to be covered. In this case, any cut edges can be covered with glass fibre fabric on site, using manual techniques.

## Claims

1. An anti-shock system for containment rooms provided with perimeter walls, comprising at least an energy-absorbing panel made of at least one layer of polymeric foam material, fixed by means of fastening means to a supporting surface of said walls, **characterised by** that
said layer of polymeric foam material constitutes a core layer and is covered, at least on its outer sides not adhering to said supporting surface, with a covering layer consisting of glass-fibre fabric.

2. The anti-shock system as in claim 1, wherein said core layer is made of closed-cell polyethylene foam at least 10 mm thick.

3. The anti-shock system as in claim 1 or 2, **characterised in that** said core layer of polymeric foam material has a density of between 20 and 60 kg/m³ and thicknesses of 10 to 40 mm.

4. The anti-shock system as any of the preceding claims, **characterised by** that said covering layer consisting of glass fibre fabric has a grammage of between 190 and 520 g/m³ and a thickness of less than 10 mm.

5. The anti-shock system as in any one of the preceding claims, wherein said glass fibre fabric is primed.

6. The anti-shock system as in any one of the preceding claims, wherein said anti-shock system comprises a plurality of panels coupled together, and also a free perimeter edge is coupled to said covering layer formed by glass fibre fabric.

7. Impact panel for an anti-shock system as in any of the preceding claims, comprising at least a core layer made of polymeric foam material, **characterised by** that
said core layer is coated externally, at least on its exposed sides, with a covering layer consisting of glass fibre fabric with a grammage of between 190 and 520 g/m³ and a thickness of less than 10 mm.

8. A method of manufacturing a panel as in claim 7, wherein a core layer made of polymeric foam material is laminated by hot lamination with a covering layer formed of glass fibre based fabric.
